# FASCICULE DE BREVET EUROPEEN

(11) **EP 3 411 602 B1**
(45) Date de publication et mention de la délivrance du brevet: **13.10.2021**
(21) Numéro de dépôt: 17706277.5
(22) Date de dépôt: 20.01.2017
(51) Int. Cl.: F16C 33/66, F16H 57/04, F16C 23/08, F16C 19/38, F16C 33/58, F16C 33/60

(54) **ENSEMBLE POUR UN RÉDUCTEUR À TRAIN ÉPICYCLOÏDAL COMPRENANT AU MOINS UN PALIER DE SATELLITE COMPORTANT DES MOYENS DE LUBRIFICATION**
PLANETENGETRIEBEUNTERSETZUNGSANORDNUNG MIT MINDESTENS EINEM SCHMIERMITTEL ENTHALTENDEN PLANETENRADLAGER
PLANETARY GEAR REDUCTION DEVICE WITH AT LEAST ONE PLANET GEAR BEARING COMPRISING LUBRICATION MEANS

(30) Priorité: 01.02.2016 FR 1650786
(43) Date de publication de la demande: 12.12.2018
(73) Titulaire: Safran Transmission Systems, 92700 Colombes (FR)
(72) Inventeur: BENYKHLEF, Aissa, 77550 Moissy Cramayel (FR); GEDIN, Patrice, 77550 Moissy Cramayel (FR); BECK, Guillaume, Julien, 77550 Moissy Cramayel (FR); FERAUD, Benjamin, 77550 Moissy Cramayel (FR)
(74) Mandataire: Gevers & Orès
(86) Numéro de dépôt international: PCT/FR2017/050117
(87) Numéro de publication internationale: WO 2017/134358

(56) Documents cités:
- EP-A1- 2 719 927
- FR-A1- 3 015 599

## Description

### Domaine de l'invention :

La présente invention se rapporte au domaine des paliers d'éléments tournants sur une pièce elle-même mise en rotation autour d'un axe décalé par rapport auxdits paliers, notamment des paliers de satellites dans un réducteur à train épicycloïdal de turbomachine. Elle concerne plus particulièrement des dispositifs de lubrification pour des roulements desdits paliers.

### Etat de la technique :

Les turbomachines à double flux, notamment celles ayant un haut taux de dilution, peuvent généralement comporter un réducteur à train épicycloïdal pour entraîner la soufflante. De manière schématique, une telle turbomachine comporte une soufflante placée généralement en avant de la partie moteur de la turbomachine, qui comprend successivement un générateur de gaz et une turbine de puissance. Le réducteur à train épicycloïdal a pour but de transformer la vitesse de rotation dite rapide de l'arbre de la turbine de puissance en une vitesse de rotation plus lente pour l'arbre entraînant la soufflante.

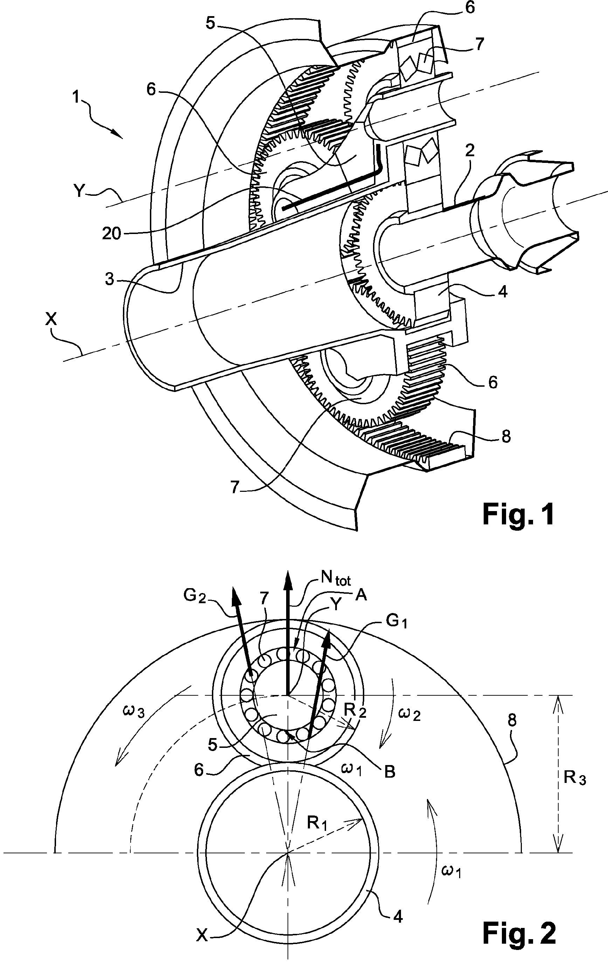

Pour cela, en référence à la figure 1, un exemple de réducteur 1 à train d'engrenages épicycloïdal comporte, par rapport à l'axe longitudinal X de la turbomachine autour duquel tournent l'arbre 2 de la turbine de puissance et l'arbre 3 de la soufflante :
- un solaire 4, sous la forme d'une roue dentée qui est montée par une liaison cannelée sur l'arbre 2 de turbine, tournant dans un sens de rotation en entraînant le réducteur,
- un porte-satellite 5 solidaire de l'arbre 3 de la soufflante, sur lequel des satellites 6 (dont trois sont représentés disposés ici à 60° les uns des autres) sont montés par des paliers 7, de manière à tourner autour d'axes Y parallèles à l'axe longitudinal X et liés au porte-satellite 5, les satellites 6 étant formés par des roues dentées s'engrenant autour du solaire 4, et
- une couronne externe 8 dentée, qui s'engrène avec les satellites 6 et qui, ici, est maintenue fixe par rapport à la structure de la turbomachine.

En référence à la figure 2, où un seul satellite 6 est schématiquement représenté, lors du fonctionnement de la turbomachine, le solaire 4 est entraîné à une vitesse de rotation déterminée ω₁ par l'arbre 2 de turbine. En engrenant à la fois sur le solaire 4 en rotation et sur la couronne externe 8 fixe, les satellites 6 sont mis en rotation à une vitesse ω₂ autour de la droite Y au centre de leur palier 7 et entraîne le porte-satellites 5, représenté sur la figure 2 par le moyeu qui supporte le palier 7, dans une rotation à une vitesse ω₃ autour de l'axe X. Les vitesses de rotation ω₂ des satellites 6 et le rapport de réduction entre la vitesse de rotation ω₃ du porte-satellites 5 et celle ω₁ du solaire 4, sont déterminés notamment par les proportions entre le rayon R₁ du solaire 4 et les rayons R₂ des satellites 6.

Généralement, bien que la soufflante tourne moins vite que la turbine, la vitesse de rotation ω₂ du porte-satellites 5 peut être élevée, de l'ordre de deux mille à quatre mille tours par minute. Donc le champ d'accélération centrifuge créé au niveau des paliers 7 peut être important, de l'ordre de mille G voire supérieur. Le palier 7 d'un satellite tournant avec le porte-satellites 5 est soumis à un chargement Ntot, comprenant une composante radiale centrifuge.

Plusieurs technologies peuvent être utilisées pour les paliers 7, telles que, par exemple :
- des paliers hydrodynamiques ou paliers lisses ;
- des roulements à rouleaux cylindriques à plusieurs rangées d'éléments roulants ; ou
- des roulements sphériques à une ou plusieurs rangées d'éléments roulants.

L'exemple présenté sur la figure 1 correspond à des paliers 7 avec deux rangées de roulements sphériques.

Ces technologies permettent de supporter les efforts appliqués aux paliers 7, notamment le chargement Ntot. Cependant, la lubrification de ces paliers, qui est un point essentiel pour les performances et la durée de vie du réducteur, est affectée par le champ centrifuge.

Si l'on considère en particulier des paliers à éléments roulants, comme ceux de la figure 1, les contacts des roulements du palier 7 soumis au chargement N voient leur chargement maximum dans une zone du palier 7 radialement interne B, c'est à dire située radialement à l'intérieur par rapport à l'axe longitudinal X du porte-satellites 5. Il est donc essentiel de lubrifier cette zone B correctement, c'est l'endroit du palier 7 qui nécessite un maximum d'huile.

A contrario, le champ centrifuge, représenté par exemple par les flèches G1 et G2, entraîne l'huile de lubrification présente entre les roulements radialement vers l'extérieur par rapport à l'axe longitudinal X, et tend à provoquer une accumulation d'huile vers une zone radialement externe A du palier 7, à l'opposé par rapport à l'axe longitudinal X.

Il existe donc un besoin de définir un dispositif de lubrification du palier qui permette d'assurer une lubrification correcte au niveau de la zone radialement interne B du palier.

Il est connu du document FR 3 015 599 un circuit de lubrification d'un palier équipant un dispositif mécanique selon le préambule de la revendication 1.

Cependant, en particulier dans le domaine des turbomachines, il est important d'obtenir ce résultat en faisant en sorte que l'on ait une surconsommation d'huile pour lubrifier correctement la zone radialement interne B avec une huile qui a tendance à s'accumuler dans la zone A. En effet, plus le débit d'huile est important, plus le volume d'huile embarqué et la taille du réservoir pour le circuit de lubrification le sont également, ce qui a un effet défavorable sur la masse de la turbomachine.

Par ailleurs, notamment pour l'intégration dans un réducteur épicycloïdal, le dispositif de lubrification doit être simple et, de préférence, l'alimentation en huile du palier sur le porte-satellites doit se faire en simplifiant l'arrivée d'huile.

### Exposé de l'invention :

A cet effet, l'invention concerne un ensemble pour un réducteur à train épicycloïdal, l'ensemble comprenant un porte-satellites, des satellites et au moins un palier de satellite porté par le porte-satellites mobile en rotation autour d'un axe de rotation, ledit palier comportant un axe central lié au porte-satellites, une bague interne montée fixe sur l'axe central, une bague externe montée mobile en rotation autour dudit axe central, et un circuit de lubrification agencé pour amener un flux d'huile entre lesdites bagues, ledit circuit de lubrification comprenant une première partie agencée pour être alimentée en huile à partir du porte-satellites au niveau de l'axe central et comprenant des orifices débouchant à l'extérieur de la bague interne au niveau d'une zone radialement interne du palier par rapport audit axe de rotation, une deuxième partie comprenant des orifices débouchant à l'extérieur de la bague interne au niveau d'une zone radialement externe du palier par rapport audit axe de rotation, et une partie intermédiaire comprenant au moins une canalisation agencée pour relier la première partie à la deuxième partie, ladite au moins une canalisation comportant au moins une perte de charge singulière formée par un coude ou un rétrécissement brusque de section et au moins un aplatissement de section transverse sur une portion majoritaire de sa longueur ou un trajet formant un détour entre deux extrémités de ladite canalisation, l'axe central comportant une première surface, radialement externe par rapport audit axe central, et la bague interne comportant une deuxième surface, radialement interne par rapport audit axe central, lesdites première et deuxième surfaces étant jointives, ladite au moins une canalisation de communication étant formée par une gorge pratiquée dans la première ou la deuxième surface.

Il est connu de l'homme du métier de pouvoir donner des valeurs importantes à la perte de charge du circuit. Il est à noter que la perte de charge d'un circuit est composée des pertes de charge singulières (liées à une variation brusque telle qu'un coude ou une restriction) et des pertes de charge régulières (ou linéaires) (liées aux frottements du fluide sur les parois de la canalisation, ces pertes dépendant de la longueur, de la rugosité des parois, de la section et de sa forme). Le détour, sous la forme de zigzags ou de boucles, augmente la longueur du trajet effectué par l'huile, l'aplatissement augmente le périmètre mouillé, les deux caractéristiques augmentent les frottements de l'huile sur les parois de la canalisation.

De cette manière, la réalisation d'une canalisation de communication combinant une perte de charge avec une augmentation des frottements le long de son trajet, permet d'obtenir des pertes de charge importantes entre la première partie et la deuxième partie du circuit de lubrification. On peut ainsi régler facilement la répartition des débits de lubrifiant envoyés entre les zones radialement interne et externe du palier, en tenant compte des efforts centrifuges.

Avantageusement, une succession de plusieurs coudes permet de créer des détours sous la forme de zigzags.

Par ailleurs, un aplatissement de section transverse correspond de préférence à un rapport supérieur à deux entre des dimensions transverses sensiblement perpendiculaires.

Ce mode de réalisation permet de former la canalisation de communication sur l'un des deux éléments, sans toucher à l'autre. De plus, la réalisation d'une gorge sur une surface peut se faire par une opération de fraisage en contrôlant précisément la forme de cette gorge.

De préférence, les première et deuxième surfaces sont cylindriques et lisses.

Avantageusement, l'aplatissement de la section transverse de ladite au moins une canalisation est obtenu en pratiquant dans la première ou la deuxième surface, une gorge de section transverse correspondant sensiblement à un arc de cercle dont le rayon de courbure est plus grand que la moitié de la distance séparant des bords de la gorge sur ladite première ou deuxième surface.

Ce mode de réalisation de la gorge permet de maintenir aisément une section de passage constante en augmentant le rayon du cercle pour augmenter le périmètre mouillé.

Avantageusement, l'une au moins des première et deuxième parties du circuit de lubrification comprend au moins une canalisation formée par une gorge pratiquée dans la première ou la deuxième surface, communiquant avec un conduit traversant la bague interne.

Encore plus avantageusement, la première partie du circuit de lubrification comprend un conduit sensiblement longitudinal, formé dans ledit axe central et agencé pour être alimenté en lubrifiant à une première de ses extrémités longitudinales, et au moins une canalisation formée par une gorge pratiquée dans la première ou la deuxième surface, communiquant avec ledit conduit par au moins un orifice de sortie de l'axe central.

La réalisation des premières et deuxièmes parties du circuit de lubrification à l'interface entre la bague et l'axe centrale permet de simplifier la fabrication du palier.

Avantageusement, la première partie du circuit de lubrification comporte au moins deux gorges dans la première ou la deuxième surface, dans des plans sensiblement perpendiculaires à l'axe de rotation, communiquant chacune avec des orifices traversant la bague interne.

Ladite au moins une canalisation de la partie intermédiaire du circuit de lubrification peut être reliée à une desdites au moins deux gorges de la première partie du circuit de lubrification.

Dans un mode de réalisation particulier, la partie intermédiaire du circuit de lubrification comporte une canalisation unique qui est reliée à celle desdites au moins deux gorges de la première partie du circuit de lubrification qui est la plus éloignée de ladite première extrémité longitudinale du conduit longitudinal de l'axe central.

L'invention concerne aussi un ensemble pour un réducteur à train épicycloïdal, comprenant un porte-satellites, des satellites et des paliers tels présentés précédemment entre les satellites et le porte-satellite.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
   - la figure 1 représente une vue éclatée en perspective d'un réducteur à train épicycloïdal comportant des paliers selon l'invention ;
   - la figure 2 représente schématiquement en coupe transversale les conditions à reproduire pour les essais d'un palier utilisé dans un réducteur tel que celui de la figure 1;
   - les figures 3a et 3b présentent schématiquement un premier mode de réalisation d'un palier selon l'invention coupé selon un plan de symétrie dans le champ centrifuge ;
   - les figures 4a et 4b présentent schématiquement une coupe transversale d'un exemple de conduite d'huile entre l'axe et la bague interne d'un palier selon l'invention sans et avec un aplatissement ;
   - la figure 5 représente un deuxième mode de réalisation d'un palier, selon l'invention, coupé selon un plan de symétrie dans le champ centrifuge ; et
   - la figure 6 représente en perspective le squelette d'un circuit de lubrification d'un troisième mode de réalisation d'un palier selon l'invention.

### Description d'un mode de réalisation :

Un palier 7 selon l'invention est par exemple utilisé dans un réducteur de turbomachine tel que déjà présenté dans ce qui précède, en référence aux figures 1 et 2.

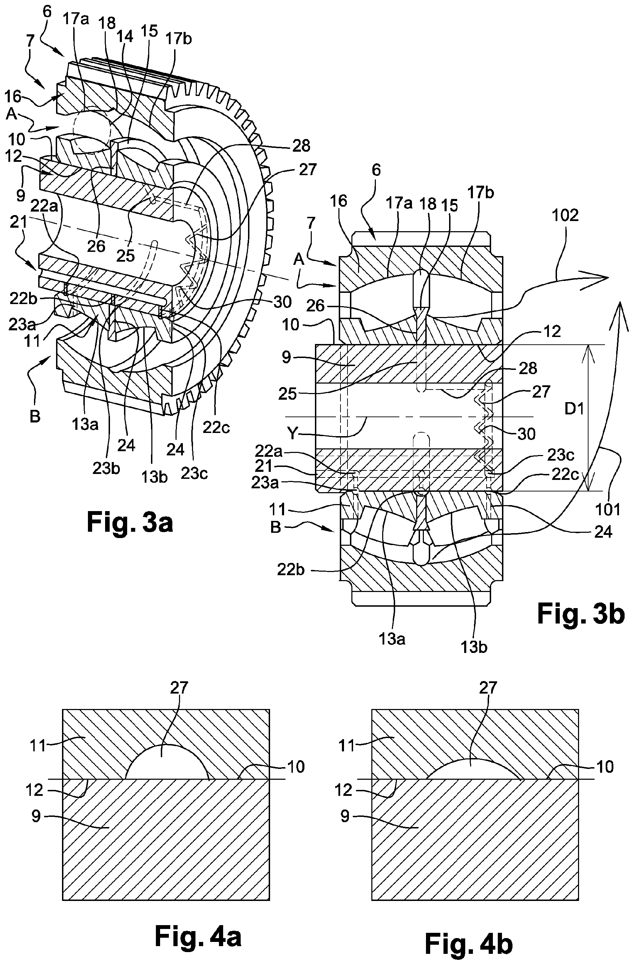

En référence aux figures 3a et 3b, un palier 7 utilisant un dispositif de lubrification selon l'invention comprend généralement les éléments décrits ci-après.

A l'intérieur, un axe 9 solidaire du porte-satellites comporte une partie de forme tubulaire, avec une section circulaire centrée sur l'axe Y. Par exemple, cet axe peut être venu de matière avec une partie transversale du porte-satellite 5 liant les axes de l'ensemble des paliers des satellites. L'axe 9 comporte ici une surface externe 10 lisse et cylindrique de diamètre D1.

Une bague interne 11 du palier est disposée autour de l'axe 9 de manière à en être solidaire et ne pas bouger en rotation. Par exemple, la bague interne 11 comporte une surface interne 12 cylindrique ayant un diamètre sensiblement égal au diamètre D1 de la surface externe 10 de l'axe 9, de manière à pouvoir les ajuster serrées.

La surface externe de la bague interne 11 comporte ici deux pistes 13a et 13b pour des éléments roulants 14, dont un seul est figuré schématiquement sur la figure 3b. Les éléments roulants 14 peuvent avoir une forme sphérique ou une forme de petits rouleaux ou tonneaux. Les pistes 13a et 13b ont une forme de révolution autour de la droite Y centrale du palier 7. Leur coupe longitudinale est adaptée à la forme des éléments roulants 14. Cette coupe peut avoir une direction générale légèrement inclinée par rapport à l'axe Y. Une couronne centrale 15 sépare ici les deux pistes 13a et 13b. De plus, des rebords sont formés à chaque extrémité longitudinale de la bague interne 11, de manière à maintenir longitudinalement les éléments roulants.

Une bague externe 16 du palier est disposée autour des éléments roulants 14, radialement en face de la bague interne 11 par rapport audit axe central. La surface interne de la bague externe comporte ici deux pistes 17a et 17b pour les éléments roulants 14. Les pistes 17a et 17b ont également une forme de révolution autour de l'axe Y du palier 7. En coupe longitudinale, elles forment ici une courbe concave autour de l'axe Y, centrée autour d'un rayon passant longitudinalement au milieu du palier 7. Les deux pistes 17a, 17b sont ici séparées sur cette courbe concave par une gorge 18, positionnée en face de la couronne centrale 15.

Les pistes 17a et 17b sont conformées pour permettre le roulement des éléments roulants 14 et, ainsi, permettre à la bague externe 16 de tourner autour de la bague interne 11 et de l'axe 9 du palier. Par ailleurs, la forme concave des pistes 17a et 17b maintient longitudinalement la bague externe 16 en position face à la bague interne 11.

Enfin la bague externe 16 est maintenue solidaire par tout moyen connu de l'homme du métier à la roue dentée 19 du satellite 6, de manière à assurer la rotation du satellite 6 autour de l'axe 9. La bague externe 16 peut être ajustée serrée par exemple dans cette roue dentée du satellite 6.

Un circuit de lubrification pour un réducteur à train épicycloïdal tel que celui qui a été décrit comporte généralement un réservoir d'huile, un premier système de canalisation avec une ou plusieurs pompes pour envoyer l'huile vers le réducteur, une enceinte de récupération de l'huile ayant lubrifié le réducteur et un deuxième système de canalisation avec une ou plusieurs pompes pour renvoyer l'huile vers le réservoir. Ces éléments, connus de l'homme du métier ne sont pas représentés.

Au niveau du réducteur, un troisième système de canalisation, solidaire du porte-satellites 5 achemine l'huile venant du réservoir notamment vers les paliers 7. Sur la figure 1, ce système de canalisation est schématiquement représenté par un conduit 20. Les autres parties de ce troisième circuit de canalisation ne sont pas représentées, ni les moyens permettant de transférer l'huile venant du premier circuit vers le référentiel en rotation du porte-satellites 5.

Un mode de réalisation de la portion du circuit de lubrification propre au palier 7 est ici détaillée en trois parties, en référence aux figures 3a et 3b.

La première partie est située au niveau d'une zone radialement interne B du palier 7 par rapport à l'axe X du porte-satellite. Elle est tout d'abord formée par un conduit longitudinal 21 sensiblement rectiligne, creusé à l'intérieur la paroi de l'axe 9 du palier 7 sensiblement dans un plan médian P par rapport à l'axe X du porte-satellites 5.

Le conduit 21 débouche sur une paroi transversale de manière à être connecté au conduit 20 du troisième système de canalisation précédemment cité. On notera que sur cet exemple, le troisième système de canalisation n'a qu'un seul conduit 20 d'amenée d'huile au palier 7, pour la simplicité d'intégration, et que ledit conduit 20 débouche sur l'axe 9 au niveau de la zone radialement interne B.

Le conduit 21 est fermé à son extrémité longitudinale opposée. Par contre, ici trois orifices 22a, 22b, 22c traversent radialement la paroi de l'axe 9 vers l'extérieur du conduit 21 vers la surface externe 10 de l'axe 9. Un orifice 22c débouche au niveau de la couronne centrale 14 de la bague interne 11. Les autres orifices 22a, 22b débouchent au niveau des extrémités longitudinales opposées des deux pistes 13a, 13b de la bague interne 11.

La première partie de la portion de circuit comporte également trois gorges 23a, 23b, 23c creusées dans la surface interne 12 de la bague interne 1 suivant un plan perpendiculaire à l'axe Y du palier 7. Chaque gorge 23a, 23b, 23c s'étend sur un secteur angulaire centré sur la zone radialement interne B, ne remontant pas au-delà de 90 degrés par rapport à un plan passant par l'axe longitudinal X. Chaque gorge 23a, 23b, 23c est positionnée longitudinalement en face de l'ouverture d'un orifice 22a, 22b, 22c sur la surface externe 10 de l'axe 9.

Comme la surface externe 10 de l'axe 9 et la surface interne 12 de la bague interne 11 sont lisses et ajustées, les gorges 23a, 23b, 23c forment des conduits à l'interface entre l'axe 9 et la bague interne 1, qui communiquent avec l'amenée d'huile 20.

Par ailleurs, un ou plusieurs conduits 24 répartis sur l'extension circonférentielle de chaque gorge 23a, 23b, 23c traversent sensiblement radialement la bague interne 11. Les conduits 24 correspondant à la gorge centrale 23c débouchent de part et d'autre de la couronne centrale 5 à l'extrémité longitudinale intérieure des pistes 13a, 13b de la bague 11. Les conduits 24 correspondant aux deux autres gorges 23a, 23b débouchent au niveau des extrémités longitudinales extérieures des pistes 13a, 13b.

Sur l'exemple présenté, la gorge 23b du côté opposé à l'amenée d'huile 20 s'étend sur un secteur angulaire très faible voire nul et est positionnée à proximité de l'extrémité longitudinale fermée du conduit 21.

Ainsi, dans cette première partie de circuit, l'huile venant du conduit d'alimentation 20 est acheminée jusqu'aux roulements 14 au niveau de la zone radialement interne B.

Il entre dans la pratique de l'homme du métier de dimensionner, par exemple avec des simulations numériques en mécanique des fluides, les différents éléments de cette première partie, le conduit longitudinal 21, les orifices 22a, 22b, 22c , les gorges 23a, 23b, 23c et les conduits 24, pour que l'huile se répartisse de manière équilibrée longitudinalement dans la zone radialement interne B et avec un débit suffisant pour lubrifier les roulements 14. Le débit d'huile arrivant ainsi par cette première partie peut s'évacuer par l'ouverture des extrémités longitudinales du volume contenant les éléments roulants 14, comme indiqué par la flèche 101 sur la figure 3b.

Une partie de l'huile peut aussi être entraînée circonférentiellement par le fonctionnement du palier en rotation. Il apparaît cependant que cela n'est pas suffisant pour amener l'huile nécessaire à la lubrification des roulements au niveau de la zone radialement externe A par rapport à l'axe X du porte-satellites ou que cela correspondrait à un débit d'huile inutilement élevé à faire passer au niveau de la zone radialement interne B.

Pour ces raisons, la première partie de circuit qui vient d'être décrite est avantageusement dimensionnée pour laisser passer un débit adapté à la lubrification dans la zone radialement interne B et le circuit de lubrification dans le palier comporte une deuxième partie dimensionnée pour laisser passer le débit d'huile adapté à la lubrification des roulements au niveau de la zone radialement externe A, avec une partie intermédiaire pour alimenter en huile la deuxième partie à partir de la première partie.

On commence par décrire la deuxième partie du circuit de lubrification dans le palier 7. Sur l'exemple présenté, cette deuxième partie comporte une gorge 25 creusée dans la surface interne 12 de la bague interne 11 suivant un plan perpendiculaire à l'axe Y du palier 7. La gorge 25 s'étend sur un secteur angulaire centré autour de la zone radialement externe A, ne descendant pas au-delà de 90 degrés autour d'un plan passant par l'axe longitudinal X. La gorge 25 est positionnée longitudinalement entre les deux pistes 13a et 13b, au niveau de la couronne centrale 15.

Par ailleurs, un ou plusieurs conduits 26 répartis sur l'extension circonférentielle de la gorge 25 traversent sensiblement radialement la bague interne 11. Les conduits 26 débouchent de part et d'autre de la couronne centrale 15 à l'extrémité longitudinale intérieure des pistes 13a, 13b de la bague 11.

Ici, cette configuration a été jugée suffisante pour fournir le débit nécessaire à la lubrification des roulements au niveau de la zone radialement externe A. Cependant des variantes sont envisageables en utilisant plusieurs gorges, de manière comparable à ce qui est fait au niveau de la zone radialement interne B.

De manière comparable à ce qui existe au niveau de la zone radialement interne B, la gorge 25 forme un conduit à l'interface entre l'axe 9 et la bague interne 11, qui peut alimenter en huile les conduits 26 traversant la bague interne 11.

La partie intermédiaire du circuit, conçue pour amener l'huile jusqu'à la gorge 25 dans la zone radialement externe A à partir de la première partie comporte ici un conduit transversal 27 s'étendant sur un arc de cercle relié à une extrémité de la gorge 23c la plus éloignée de l'extrémité longitudinale ouverte du conduit 21 d'amenée d'huile et après le dernier conduit 24 sur la dite gorge 23c traversant la bague interne 11.

Le conduit transversal 27 communique ensuite avec la gorge 25 de la deuxième partie par un conduit longitudinal 28 s'étendant dans un plan médian du porte-satellites, au niveau dans la zone radialement externe A.

Avantageusement, le conduit transversal 27 et le conduit longitudinal 28 sont également formés à l'interface entre l'axe 9 et la bague interne 11 par des gorges correspondantes 27, 28, creusées dans la surface interne 12 de la bague interne 11. La surface externe 10 de l'axe 9 est lisse à cet endroit.

Selon l'invention, dans une première variante de réalisation, la gorge 27 est creusée de manière à ce que le conduit correspondant forme au moins un, en général plusieurs, coude brusque, comme cela est représenté par la ligne en zigzag sur les figures 3a et 3b.

Le ou les coudes forment une ou plusieurs pertes de charge singulières dans la partie intermédiaire qui permettent d'éviter que le fort champ centrifuge G auquel est soumise l'huile dans le circuit de lubrification n'assèche la première partie du circuit. De plus, la présence des coudes 30 crée un ou plusieurs zigzags dans le tracé de la canalisation 27, augmentant ainsi sa longueur et les pertes de charge par frottement le long de ses parois internes. Par des méthodes connues, l'homme du métier peut ainsi définir les angles de coudes et leur répartition sur le conduit 27 pour adapter la perte de charge aux efforts centrifuges dans le réducteur en fonctionnement de manière à équilibrer les débits d'huile entre la première et la deuxième partie du circuit dans le palier 7.

Les zigzags forment des détours dans le trajet de la canalisation 27, au sens où le trajet s'éloigne de la courbe le plus courte pour en joindre ses deux extrémités. Dans une variante non représentée, un coude peut être suivi par une ou plusieurs boucles suivant l'interface entre l'axe central 9 et la bague interne 11. Ces boucles forment des détours qui allongent le trajet parcouru par l'huile dans la canalisation 27, donc les pertes de charge par frottement le long des parois.

De cette manière, un débit d'huile adapté est envoyé à la fois au niveau de la zone radialement interne B et de la zone radialement externe A, pour lubrifier correctement mais sans excès les roulements sur toute la circonférence du palier 7. Comme indiqué par les flèches 101 et 102, l'huile s'évacue ensuite du palier 7 par les ouvertures aux extrémités longitudinales du volume contenant les éléments roulants entre les bagues interne 11 et externe 16.

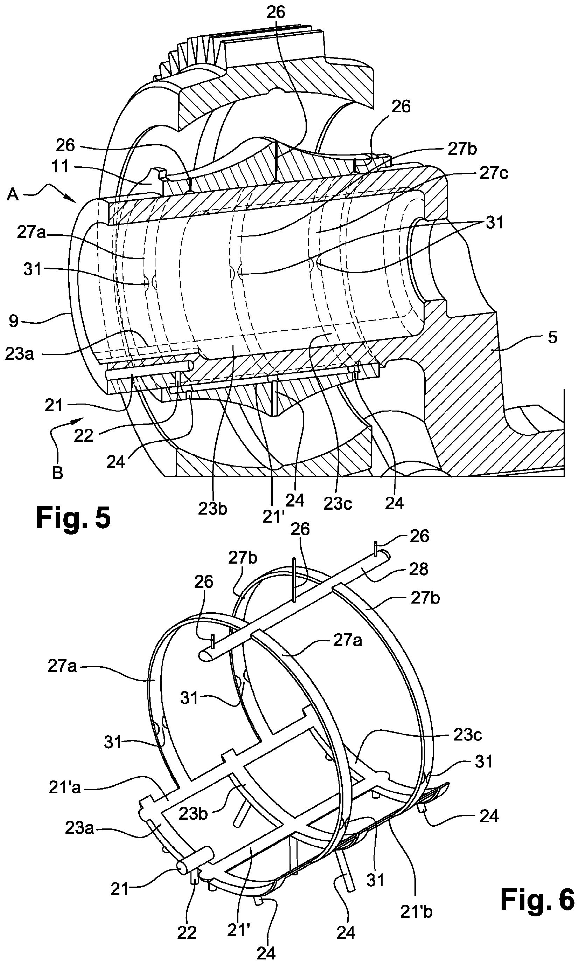

Selon une autre variante de réalisation, non représentée sur les figures 3a et 3b mais indiquée dans les figures 5 et 6 qui sont discutées plus loin, des pertes de charge singulières peuvent aussi être créées en créant un ou plusieurs rétrécissements brusques 31 de la canalisation 27.

En outre, pour augmenter les frottements en dehors des pertes de charge singulières, la section transverse de la canalisation 27 peut être fortement aplatie. Cela crée une augmentation de périmètre mouillé par rapport à une section ronde, qui augmente fortement la surface de frottement.

En référence aux figures 4a et 4b, une augmentation de périmètre mouillé très forte tout en gardant une section de passage adaptée au débit souhaité peut être créée en jouant sur la forme de la gorge formant la canalisation 27.

La figure 4a présente une section de gorge 27 ayant par exemple une forme semi-circulaire. L'aire du demi-cercle centré sur la surface 12 correspond ici à une section de passage SP donnée, adaptée au débit souhaité. La perte de charge sur un tronçon de conduit ayant cette section est sensiblement proportionnelle au périmètre mouillé, ici la somme des longueurs du demi-cercle et de son diamètre.

En formant la gorge 27, comme indiqué sur la figure 4b, avec un cercle de plus grand diamètre mais de centre plus éloigné de la surface 12, augmentant ainsi le rapport entre la distance entre les bords de la gorge 27 et sa profondeur à une valeur supérieure à deux, on peut obtenir une même valeur de section de passage SP mais avec un périmètre mouillé plus important. On peut donc augmenter fortement le frottement le long de la canalisation en l'aplatissant et en préservant une valeur de section de passage adaptée au débit d'huile à faire passer.

Une combinaison des variantes, par exemple des coudes avec un aplatissement de la section de passage, est également envisageable.

Par ailleurs, le conduit longitudinal 26 de la partie intermédiaire peut aussi présenter des pertes de charge singulières.

Au niveau de la réalisation du circuit de lubrification dans le palier, on notera que le mode de réalisation présenté est facile à réaliser. Le conduit longitudinal 21 et les orifices transversaux 22a, 22b, 22c dans l'axe 9, ainsi que les conduits transversaux 24, 26 dans la bague interne 11 peuvent être formés par alésage. Les gorges 23a, 23b, 23c, 25, 26, 27, quant à elles, peuvent être réalisées par fraisage. Cette technique permet notamment de contrôler la forme creusée pour créer les pertes de charge singulière.

On notera également que l'exemple de circuit de lubrification dans le palier 7 a été présenté avec des gorges creusées dans la paroi interne 12 de la bague interne 11 mais qu'une alternative possible, pour former des conduits à l'interface entre la bague interne 11 et l'axe 9 consiste à utiliser des gorges creusées dans la surface externe 10 de l'axe 9, en n'usinant pas la surface interne 12 lisse de la bague interne. Nous notons également qu'il est plus simple d'usiner, par exemple, la canalisation 27 dans la surface externe de l'axe central 9 que sur celle de la bague interne. Un usinage externe est plus simple à réaliser qu'un usinage interne.

D'autres modes de réalisation de l'architecture du circuit de lubrification peuvent également intégrer l'invention.

La figure 5 illustre un deuxième exemple de mode de réalisation du circuit de lubrification. Dans ce deuxième exemple, le conduit longitudinal 21 creusé dans l'axe central 9 a une extension longitudinale réduite. Il s'arrête sensiblement au niveau de la première gorge transversale 23a de la première partie du circuit de lubrification et alimente, par un unique conduit traversant 22, une gorge longitudinale 21' creusée à l'interface entre la bague interne 11 et l'axe central 9. C'est cette gorge longitudinale 21' qui alimente en huile les trois gorges transversales 23a, 23b, 23c reliées aux conduits 24 traversant la bague interne 11 dans la zone radialement interne B.

La deuxième partie du circuit de lubrification comporte trois orifices 26 traversant la bague interne 11 dans la zone radialement externe A par rapport à l'axe du porte-satellites 5, et positionnés transversalement sensiblement en face des gorges transversales 23a, 23b, 23c de la première partie.

Ici, la partie intermédiaire est composée de deux fois trois gorges 27a, 27b, 27c, disposées de part et d'autre de la gorge longitudinale 21' de la première partie et reliant chaque gorge transversale 23a, 23b, 23c de la première partie à un orifice 26 de la deuxième partie traversant la bague interne.

Comme indiqué schématiquement sur la figure 6, selon l'invention, on installe sur chaque gorge, par exemple, un ou plusieurs rétrécissements brusques 31 et l'on associe cela une section aplatie de la gorge.

D'un point de vue réalisation, l'ensemble du circuit, après le conduit longitudinal 21, peut être formé sur la surface de la périphérie interne de la bague interne 11, en creusant une gorge d'alimentation longitudinale pour la première partie et trois gorges circulaires avec un aplatissement adapté, sur lesquels on place des restrictions de section entre les orifices traversants 24 de la zone radialement interne B et ceux 26 de la zone radialement externe A.

La figure 6 illustre un troisième exemple d'architecture du circuit de lubrification.

Par rapport à l'exemple précédent, la première partie comporte deux gorges longitudinales complémentaires 21'a, 21'b dans la zone radialement interne B, reliant les gorges transversales 23a, 23b, 23c de part et d'autre de la gorge centrale 21'.

La deuxième partie, comporte de son côté une gorge longitudinale 28 reliant les trois orifices traversants 26.

La partie intermédiaire comporte deux gorges transversales 27a, 27b de chaque côté, reliant les gorges longitudinales latérales 21'a, 21'b de la zone radialement interne B à la gorge longitudinale centrale de la zone radialement externe. Ici, chacune des gorges transversales 27a, 27b de la partie intermédiaire est traité selon invention, soit en effectuant au moins un zigzag avec un coude (variante non représentée), soit en plaçant au moins une variation brusque de section 31, associée à un aplatissement de section transverse sur une portion majoritaire de sa longueur.

## Revendications

1. Ensemble pour un réducteur à train épicycloïdal, l'ensemble comprenant un porte-satellites (5), des satellites (6) et au moins un palier (7) de satellite (6) porté par le porte-satellites (5), ledit palier comportant un axe central (9), une bague interne (11) montée fixe sur l'axe central (9), une bague externe (16) montée mobile en rotation autour dudit axe (9) central, et un circuit de lubrification agencé pour amener un flux d'huile entre lesdites bagues interne et externe (11, 16), ledit circuit de lubrification comprenant des orifices (24) débouchant à l'extérieur de la bague interne (11) au niveau d'une zone radialement interne (B) du palier par rapport audit axe de rotation (X), une deuxième partie (25, 26) comprenant des orifices (26) débouchant à l'extérieur de la bague interne (11) au niveau d'une zone radialement externe (A) du palier par rapport à un axe de rotation (X), et une partie intermédiaire comprenant au moins une canalisation (27) agencée pour relier la première partie (23a-23c, 24) à la deuxième partie (25, 26), ladite au moins une canalisation (27) comportant au moins une perte de charge singulière formée par un coude (30) ou un rétrécissement brusque de section (31) et au moins un aplatissement de section transverse sur une portion majoritaire de sa longueur ou un trajet formant un détour, **caractérisé en ce que**
le porte-satellites (5) est mobile en rotation autour de l'axe de rotation (X) et **en ce que** l'axe central (9) est lié au porte-satellites et comporte une première surface (10), radialement externe par rapport audit axe central, ledit circuit de lubrification comprenant une première partie (23a-23c, 24) agencée pour être alimentée en huile à partir du porte-satellites (5) au niveau de l'axe central (9), et la bague interne (11) comportant une deuxième surface (12), radialement interne par rapport audit axe central, lesdites première et deuxième surfaces étant jointives, ladite au moins une canalisation (27) étant formée par une gorge pratiquée dans la première (10) ou la deuxième (12) surface.

2. Ensemble selon la revendication précédente, dans lequel les première (10) et deuxième (12) surfaces sont cylindriques et lisses.

3. Ensemble selon la revendication 1 ou 2, dans lequel l'aplatissement de la section transverse de ladite au moins une canalisation (27) est obtenu en pratiquant dans la première (10) ou la deuxième (12) surface, une gorge (27) de section transverse correspondant sensiblement à un arc de cercle dont le rayon de courbure est plus grand que la moitié de la distance séparant des bords de la gorge sur ladite première (10) ou deuxième (12) surface.

4. Ensemble selon l'une quelconque des revendications 1 à 3, dans lequel l'une au moins des première et deuxième parties du circuit de lubrification comprend au moins une canalisation formée par une gorge pratiquée dans la première (10) ou la deuxième (12) surface, communiquant avec un conduit traversant la bague interne (11)

5. Ensemble selon la revendication précédente, dans lequel la première partie du circuit de lubrification comprend un conduit (21) sensiblement longitudinal, formé dans ledit axe central (9) et agencé pour être alimenté en lubrifiant à une première de ses extrémités longitudinales, et dans lequel au moins une canalisation formée par une gorge pratiquée dans la première (10) ou la deuxième (12) surface, communiquant avec ledit conduit par au moins un orifice (22a-22c) de sortie de l'axe central (9)

6. Ensemble selon la revendication précédente, dans lequel la première partie du circuit de lubrification (23a-23c, 24) comporte au moins deux gorges (23a-23c) dans la première (10) ou la deuxième (12) surface, dans des plans sensiblement perpendiculaires à l'axe de rotation (X), communiquant chacune avec des orifices (24) traversant la bague interne (11).

7. Ensemble selon la revendication précédente, dans lequel ladite au moins une canalisation (27) de la partie intermédiaire du circuit de lubrification est reliée à une desdites au moins deux gorges (23a-23c) de la première partie du circuit de lubrification.

8. Ensemble selon la revendication précédente, dans lequel la partie intermédiaire du circuit de lubrification comporte une canalisation unique (27) qui est reliée à celle (23c) desdites au moins deux gorges (23a-23c) de la première partie du circuit de lubrification qui est la plus éloignée de ladite première extrémité longitudinale du conduit longitudinal (21) de l'axe central (9).

## Patentansprüche

1. Einheit für ein epizyklisches Untersetzungsgetriebe, wobei die Einheit einen Satellitenträger (5), Satellitenräder (6) und mindestens ein Lager (7) eines Satellitenrades (6), das von dem Satellitenträger (5) getragen wird, umfasst, wobei das Lager eine zentrale Achse (9) einen Innenring (11), der stationär auf der zentralen Achse (9) montiert ist, einen Außenring (16), der in Drehung beweglich um die zentrale Achse (9) montiert ist, und einen Schmierkreislauf, der zum Zuführen eines Ölstroms zwischen dem Innenring und dem Außenring (11, 16) eingerichtet ist, umfasst, wobei der Schmierkreislauf Öffnungen (24) umfasst, die außerhalb des Innenrings (11) auf dem Niveau einer radial inneren Zone (B) des Lagers in Bezug zu der Drehachse (X) münden, ein zweiter Teil (25, 26) Öffnungen (26) umfasst, die außerhalb des Innenrings (11) auf dem Niveau einer radial äußeren Zone (A) des Lagers in Bezug auf eine Drehachse (X) münden, und einen Zwischenteil, der mindestens eine Kanalisation (27) umfasst, die eingerichtet ist, um den ersten Teil (23a-23c, 24) mit dem zweiten Teil (25, 26) zu verbinden, wobei die mindestens eine Kanalisation (27) mindestens einen singulären Lastverlust umfasst, der von einem Winkelstück (30) oder einer plötzlichen Querschnittverschmälerung (31) und mindestens einer Querschnittabflachung auf einem Hauptabschnitt ihrer Länge oder ihres Verlaufs gebildet ist, der eine Umleitung bildet, **dadurch gekennzeichnet, dass**
der Satellitenträger (5) in Drehung um die Drehachse (X) beweglich ist, und dass die zentrale Achse (9) mit dem Satellitenträger verbunden ist und eine erste Oberfläche (10) umfasst, die radial in Bezug zu der zentralen Achse außen ist, wobei der Schmierkreislauf einen ersten Teil (23a-23c, 24) umfasst, der eingerichtet ist, um mit Öl ausgehend von dem Satellitenträger (5) im Bereich der zentralen Achse (9) versorgt zu sein, und der Innenring (11) eine zweite Oberfläche (12) umfasst, die in Bezug auf die zentrale Achse radial innen liegt, wobei die erste und die zweite Oberfläche aneinanderstoßen, wobei die mindestens eine Kanalisation (27) von einer Nut gebildet ist, die in der ersten (10) oder der zweiten (12) Oberfläche angelegt ist.

2. Einheit nach dem vorstehenden Anspruch, wobei die erste (10) und die zweite (12) Oberfläche zylindrisch und glatt sind.

3. Einheit nach Anspruch 1 oder 2, wobei die Abflachung des Querschnitts der mindestens einen Kanalisation (27) durch Anlegen in der ersten (10) oder der zweiten (12) Oberfläche einer Nut (27) mit einem Querschnitt, der im Wesentlichen einem Kreisbogen entspricht, dessen Krümmungsradius größer ist als die Hälfte des Abstands, der die Ränder der Nut auf der ersten (10) oder zweiten (12) Oberfläche trennt, erhalten wird.

4. Einheit nach einem der Ansprüche 1 bis 3, wobei mindestens einer des ersten und des zweiten Teils des Schmierkreislaufs mindestens eine Kanalisation umfasst, die von einer Nut gebildet ist, die in der ersten (10) oder der zweiten (12) Oberfläche angelegt ist, die mit einer Leitung, die den Innenring (11) durchquert, in Verbindung steht.

5. Einheit nach dem vorstehenden Anspruch, wobei der erste Teil des Schmierkreislaufs eine Leitung (21), die im Wesentlichen länglich ist, umfasst, die in der zentralen Achse (9) gebildet und eingerichtet ist, um unter Schmieren an einem ersten ihrer Längsenden versorgt zu werden, und wobei mindestens eine Kanalisation, die von einer Nut gebildet ist, die in der ersten (10) oder der zweiten (12) Oberfläche angelegt ist, mit der Leitung durch mindestens eine Ausgangsöffnung (22a-22c) der zentralen Achse (9) in Verbindung steht.

6. Einheit nach dem vorstehenden Anspruch, wobei der erste Teil des Schmierkreislaufs (23a-23c, 24) mindestens zwei Nuten (23a-23c) in der ersten (10) oder der zweiten (12) Oberfläche in Ebenen umfasst, die im Wesentlichen zu der Drehachse (X) senkrecht sind, die jeweils mit Öffnungen (24), die den Innenring (11) durchqueren, in Verbindung stehen.

7. Einheit nach dem vorstehenden Anspruch, wobei die mindestens eine Kanalisation (27) des Zwischenteils des Schmierkreislaufs mit einer der mindestens zwei Nuten (23a-23c) des ersten Teils des Schmierkreislaufs verbunden ist.

8. Einheit nach dem vorstehenden Anspruch, wobei der Zwischenteil des Schmierkreislaufs eine einzige Kanalisation (27) umfasst, die mit der (23c) der mindestens zwei Nuten (23a-23c) des ersten Teils des Schmierkreislaufs verbunden ist, die die am weitesten von dem ersten Längsende der länglichen Leitung (21) der zentralen Achse (9) entfernt ist.

## Claims

1. Assembly for an epicyclic reduction gearset, the assembly comprising a satellite carrier (5), satellites (6) and at least one satellite (6) bearing (7) carried by the satellite carrier (5), said bearing comprising a central axis (9), an inner ring (11) securely mounted on the central axis (9), an outer ring (16) mounted to rotate around said central axis (9), and a lubrication circuit arranged to bring a flow of oil between said inner and outer rings (11, 16), said lubrication circuit comprising openings (24) opening to the outside of the inner ring (11) in a radially inner area (B) of the bearing with respect to said axis of rotation (X), a second portion (25, 26) comprising openings (26) opening to the outside of the inner ring (11) in a radially outer area (A) of the bearing with respect to said axis of rotation (X), and an intermediate portion comprising at least one channelling (27) arranged to connect the first portion (23a-23c, 24) to the second portion (25, 26), said at least one channelling (27) comprising at least one singular pressure drop formed by an elbow (30) or a sudden narrowing of the cross-section (31) and at least one flattening of the transverse cross-section over a major portion of the length thereof or a path forming a detour, **characterised in that** the satellite carrier (5) is rotatable about an axis of rotation (X) and **in that** the central axis (9) is linked to the satellite carrier and comprising a radially outer first surface (10) with respect to said central axis, said lubrication circuit comprising a first portion (23a-23c, 24) arranged to be supplied with oil from the satellite carrier (5) at the central axis (9) and the inner ring (11) comprising a radially inner second surface (12) with respect to said central axis, said first and second surfaces being joined, said at least one channelling (27) being formed by a groove applied in the first (10) or the second (12) surface.

2. Assembly according to the preceding claim, wherein the first (10) and second (12) surfaces are cylindrical and plain.

3. Assembly according to claim 1 or 2, wherein the flattening of the transverse cross-section of said at least one channelling (27) is obtained by applying in the first (10) or the second (12) surface, a groove (27) of transverse cross-section corresponding substantially to an arc of a circle of which the radius of curvature is greater than half of the distance separating the edges of the groove on said first (10) or second (12) surface.

4. Assembly according to any one of claims 1 to 3, wherein at least one of the first and second portions of the lubrication circuit comprises at least one channelling formed by a groove applied in the first (10) or the second (12) surface, communicating with a duct passing through the inner ring (11).

5. Assembly according to the preceding claim, wherein the first portion of the lubrication circuit comprises a substantially longitudinal duct (21), formed in said central axis (9) and arranged to be supplied with lubricant at a first of its longitudinal ends, and wherein at least one channelling formed by a groove applied in the first (10) or the second (12) surface, communicating with said duct by at least one outlet opening (22a-22c) of the central axis (9).

6. Assembly according to the preceding claim, wherein the first portion of the lubrication circuit (23a-23c, 24) comprises at least two grooves (23a-23c) in the first (10) or the second (12) surface, in planes that are substantially perpendicular to the axis of rotation (X), each communicating with openings (24) passing through the inner ring (11).

7. Assembly according to the preceding claim, wherein said at least one channelling (27) of the intermediate portion of the lubrication circuit is connected to at least one of said two grooves (23a-23c) of the first portion of the lubrication circuit.

8. Assembly according to the preceding claim, wherein the intermediate portion of the lubrication circuit comprises a single channelling (27) that is connected to that (23c) of said at least two grooves (23a-23c) of the first portion of the lubrication circuit which is the farthest away from said first longitudinal end of the longitudinal duct (21) of the central axis (9).
